# EUROPEAN PATENT APPLICATION

(11) **EP 2 145 744 A1**
(43) Date of publication of application: **20.01.2010**
(21) Application number: 09165426.9
(22) Date of filing: 14.07.2009
(51) Int. Cl.: B27C 5/02, B27C 9/00, B27C 9/04, B27D 5/00, B27M 1/00, B27M 1/08

(54) **Apparatus and method for cutting panels**

(30) Priority: 14.07.2008 IT MO20080193
(71) Applicant: SCM Group S.p.A., 47900 Rimini (RN) (IT)
(72) Inventor: Maioli, Fabio, 47822, Santarcangelo di Romagna (RN) (IT)
(74) Representative: Cicconetti, Andrea

(57) **Abstract**

An apparatus (1) for cutting a panel (2), in particular made of wood or similar materials, comprises a base (8), a portal structure (3) that is slidably supported by said base (8) along a first axis (X), and operating unit means, comprising at least a milling unit (4), for machining said panel (2), said operating unit means being movable towards and away from said base (8) along a second axis (Z) and being slidably supported by said portal structure (3) along a third axis (Y).

## Description

The invention relates to an apparatus for cutting panels, in particular made of wood or similar materials, and a method for cutting panels by means of which it is possible to reduce the initial dimensions of the panels, following suitable cutting patterns to obtain parts, or portions, of panels having lesser dimensions.

Cutting machines are known that are arranged for cutting panels, in particular made of wood or similar materials, in order to obtain parts, or portions, of panels of lesser dimensions.

Such cutting machines comprise a horizontal work plane, a transferring system and a plurality of cutting units.

The transferring system is arranged for moving the panel from an entry zone, or storage zone, of the cutting machine to an outlet zone of the cutting machine. The panel, during this movement, traverses an L-shaped work zone, in which it is initially machined by a longitudinal cutting station and subsequently by a transverse cutting station.

The longitudinal cutting station cuts the panel longitudinally, so as to obtain panel portions generally having the shape of an elongated strip along a longitudinal direction.

In particular, the panel portions are cut by a cutting unit comprising one or more horizontal-axis rotating blades, each supported by an arm that is movable along the longitudinal direction by actuating means.

The portions that have been cut are subsequently transferred by the transferring system to the transverse cutting station.

The transverse cutting station cuts transversely the panel portions that were previously cut by the longitudinal cutting station.

In particular, such panel portions are cut by a further cutting unit comprising one or more horizontal-axis rotating blades, each supported by an arm that is movable along a transverse direction by actuating means.

In this manner, final panel portions of rectangular shape are obtained, such final portions being subsequently positioned by the transferring system in the outlet zone and being still subsequently removed from the outlet zone by an operator.

A drawback of the known apparatuses and methods is that they do not enable high productivity to be obtained.

In fact, in order to obtain the panels cut according to the preset dimensions, it is necessary to perform successive cutting machinings on the cutting machine.

In other words, a first cutting operation is initially necessary in which one/more longitudinal cut/s is/are performed and subsequently a second cutting operation is necessary in which one/more transverse cut/s is/are made.

A further drawback of the known cutting machines is that they are not much flexible.

In fact the known cutting machine enable parts, or portions, of panels to be obtained that have only a rectangular shape. Further, with such cutting machines it is possible to obtain only a limited number of sizes for the aforesaid parts, or portions, of panels, inasmuch as it is not permitted to modify a mutual distance between the blades of the cutting unit and of the further cutting unit.

A still further drawback of the cutting machines disclosed above is that they are particularly bulky.

This is due in particular to the significant surface occupied by the work plane to enable the cutting unit and the further cutting unit to perform the desired cuts.

An object of the invention is to improve the apparatuses and the methods for cutting panels, in particular made of wood or similar materials.

A further object is to make apparatuses and methods that enable productivity to be increased compared with known cutting machines.

A still further object is to provide cutting apparatuses that are more flexible than known cutting machines.

A still another further object is to make apparatuses that are less bulky than known cutting machines.

In a first aspect of the invention there is provided an apparatus for cutting a panel, in particular made of wood or similar materials, comprising a base, a portal structure that is slidably supported by said base along a first axis, and operating unit means for machining said panel, said operating unit means being movable towards and away from said base along a second axis and being slidably supported by said portal structure along a third axis, **characterised in that** said operating unit means comprises at least a milling unit.

Owing to the first aspect of the invention it is possible to obtain a cutting apparatus that is more flexible than known cutting machines.

In fact, said milling unit can be moved in the space along any work trajectory, which enables parts or portions of said panel to be obtained that have any shape and size.

Further, said apparatus is particularly compact.

In a second aspect of the invention, there is provided a method for cutting a panel, in particular made of wood or similar materials, comprising cutting said panel along at least a cutting line and still cutting said panel along at least a further cutting line, **characterised in that** said cutting and said still cutting are performed respectively by at least a milling unit and by at least a further milling unit of an apparatus as disclosed in the aforesaid first aspect, said at least a milling unit and said at least a further milling unit being movable independently of one another at least along an operating direction.

Owing to the second aspect of the invention it is possible to provide a method that enables high productivity to be obtained.

In fact, by said at least a milling unit and said at least a further milling unit, said at least a cutting line and said at least further cutting line, for example substantially perpendicular, can be made in an independent manner, and, at least partially, in the same interval of time, which enables machining time to be reduced and consequently the productivity of a cutting apparatus to be increased by applying the aforesaid method.

The invention can be better understood and implemented with reference to the attached drawings that illustrate some embodiments thereof by way of non-limiting example, in which:
Figure 1 is a schematic side view of an apparatus for cutting panels in a first embodiment;
Figure 2 is a schematic front view of the apparatus in Figure 1;
Figure 3 is a schematic plan view of the apparatus in Figure 1;
Figure 4 is a schematic side view of the apparatus for cutting panels in a second embodiment;
Figure 5 is a schematic front view of the apparatus in Figure 4;
Figure 6 is a schematic plan view of the apparatus in Figure 4;
Figure 7 is a schematic plan view of the apparatus for cutting panels in a third embodiment;
Figure 8 is a schematic side view of the apparatus for cutting panels in a fourth embodiment;
Figure 9 is a schematic front view of the apparatus in Figure 8;
Figure 10 is a schematic plan view of the apparatus in Figure 8;
Figure 11 is a schematic plan view of the apparatus for cutting panels in a fifth embodiment;
Figure 12 is a schematic side view of an apparatus for cutting panels in a sixth embodiment;
Figure 13 is a schematic front view of the apparatus in Figure 12;
Figure 14 is a schematic plan view of the apparatus in Figure 12;
Figure 15 is a schematic plan view of the apparatus for cutting panels in a seventh embodiment;
Figure 16 is a schematic side view of the apparatus for cutting panels in an eighth embodiment;
Figure 17 is a schematic front view of the apparatus in Figure 16;
Figure 18 is a schematic plan view of the apparatus in Figure 16;
Figure 19 is a schematic side view of the apparatus for cutting panels in a ninth embodiment;
Figure 20 is a schematic front view of the apparatus in Figure 19;
Figure 21 is a schematic plan view of the apparatus in Figure 19;
Figure 22 is a partially sectioned perspective schematic view of the apparatus for cutting panels in a tenth embodiment;
Figure 23 is a schematic plan view of the apparatus for cutting panels in an eleventh embodiment;
Figure 24 is a schematic plan view of the apparatus for cutting panels in a twelfth embodiment;
Figure 25 is a schematic side view of a milling unit included in the apparatus for cutting panels and provided with a first cutting tool;
Figure 26 is a schematic side view of the milling unit in Figure 25 provided with a second cutting tool.

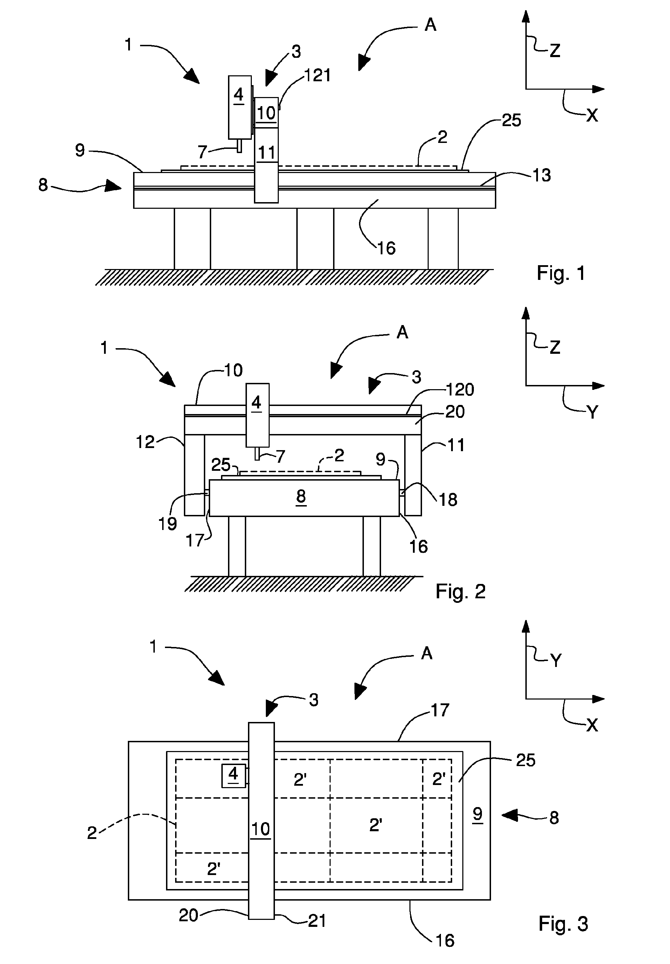

With reference to Figures 1 to 3, there is shown a first embodiment A of an apparatus 1 for cutting a panel 2, in particular made of wood or similar materials.

In particular, the apparatus 1 is arranged for cutting the panel 2 according to a preset cutting pattern into parts 2', or portions, of desired dimensions, and in particular of dimensions that are less than the panel 2.

The apparatus 1 comprises a base 8 extending substantially parallelly to a substantially horizontal first axis X.

The base 8 comprises a sucking supporting plane 9 arranged, in use, for supporting and retaining by a vacuum a porous panel 25, a so-called "support panel", arranged for supporting the panel 2 to be cut.

The base 8 comprises a first side wall 16 and a second side wall 17, opposite the first side wall 16.

A first guiding element 13 and a second guiding element, which is not shown, are respectively fixed, or obtained on the first side wall 16 and on the second side wall 17, the first guiding element 13 and the second guiding element extending substantially parallelly to the first axis X.

In particular, the first guiding element 13 and the second guiding element extend respectively substantially for the entire length of the first side wall 16 and of the second side wall 17.

The apparatus 1 further comprises a portal structure 3 slidably supported by the base 8 substantially parallelly to the first axis X.

The portal structure 3 comprises a first upright element 11 and a second upright element 12, that are mutually facing and extending substantially parallelly to a second axis Z, which is substantially vertical and perpendicular to the first axis X.

The first upright element 11 and the second upright element 12 comprise respectively a first sliding block element 18 and a second sliding block element 19 arranged for engaging respectively with the first guiding element 13 and with the second guiding element.

The portal structure 3 further comprises a crosspiece element 10 supported by the first upright element 11 and by the second upright element 12.

In particular, the crosspiece element 10 extends substantially parallelly to a third axis Y, substantially horizontal and perpendicular to the first axis X, the first axis X, the second axis Z and the third axis Y forming a triad of Cartesian axes.

The crosspiece element 10 comprises a first wall 20 and a second wall 21, mutually opposite and extending substantially perpendicularly to the supporting plane 9.

A first linear guide 120 and a second linear guide 121 that extend substantially parallelly to the third axis Y are fixed or obtained respectively on the first wall 20 and on the second wall 21.

The apparatus 1 further comprises a milling unit 4 slidably supported by the first linear guide 120 substantially parallelly to the third axis Y and movable towards and away from the supporting plane 9.

The milling unit 4 is arranged for rotating, by an electrospindle, a cutting tool 7 arranged for cutting the panel 2.

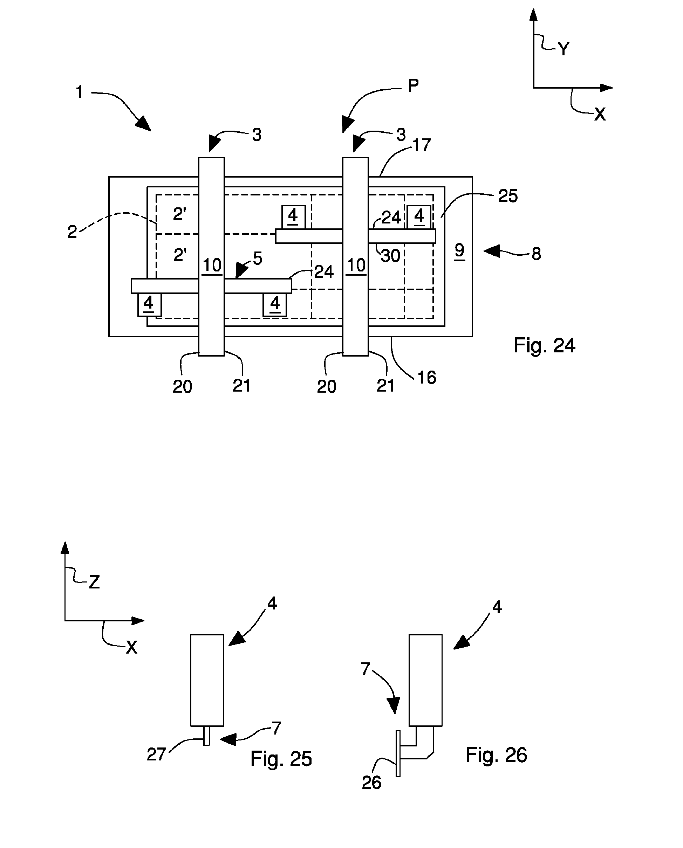

The cutting tool 7 may comprise, as shown in Figure 25, an end mill 27, or, as shown in Figure 26, a cutter disc mill 26.

In use, the cutting tool 7 is movable substantially parallelly to the first axis X by the portal structure 3, and substantially parallelly to the second axis Z and to the third axis Y by the milling unit 4.

In this manner, in use, after positioning the panel 2 on the porous panel 25, it is possible to move the cutting tool 7 such as to cut the panel 2 according to the desired cutting pattern, this cutting pattern comprising, for example, cuts made substantially parallelly to the first axis X and/or cuts made substantially parallelly to the third axis Y and/or cuts made transversely to the third axis Y and/or cuts made along closed lines, such as, for example, a circumference, an ellipse, a contour of a polygon and the like.

In particular, in order to make such cuts, which are transverse to the third axis Y, it is sufficient to move the portal structure 3 along the base 8 and the milling unit 4 along the crosspiece element 10.

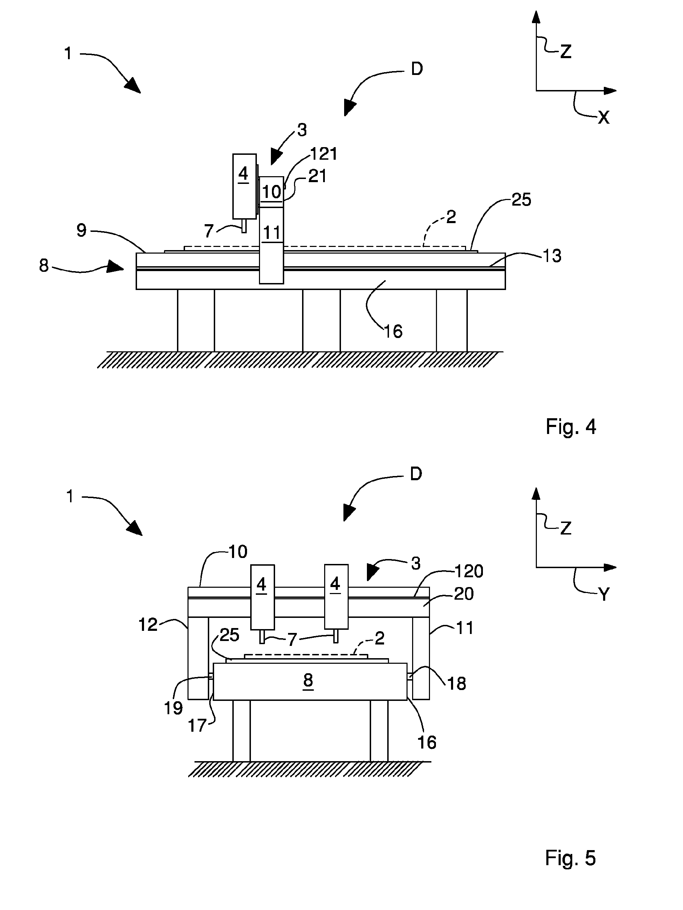

With reference to figures 4 to 6, there is shown a second embodiment B of the apparatus 1.

The components of the apparatus 1 in the second embodiment B that are common to the apparatus 1 in the first embodiment A will not be disclosed again in detail and will be indicated by the same reference numbers that have already been used for the first embodiment A.

In the second embodiment B, the apparatus 1 comprises two milling units 4 slidably supported substantially parallelly to the third axis Y by the first linear guide 120 of the crosspiece element 10.

In use, it is possible to drive selectively the cutting tools 7 of the milling units 4 so as to make on the panel 2, for example substantially simultaneously, a pair of cuts that are substantially parallel to the first axis X and/or transverse to the third axis Y, or a pair of cuts made along respective closed lines, or, by driving only one of the milling units 4, a cut that is substantially parallel to the third axis Y.

In a version, not shown, of the second embodiment B, a milling unit 4 is slidably supported by the first linear guide 120, whilst the other milling unit 4 is slidably supported by the second linear guide 121.

In this manner, in use, it is possible to drive the cutting tools 7 so as to make on the panel 2, for example substantially simultaneously, a pair of cuts substantially parallel to the first axis X and/or parallel to the third axis Y and/or transverse to the third axis Y, or a pair of cuts made along respective closed lines.

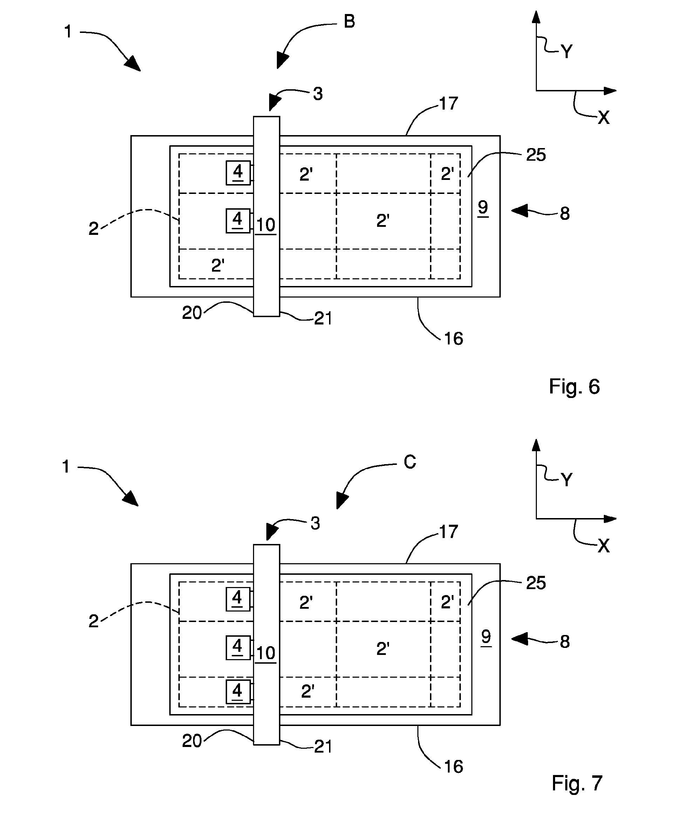

With reference to Figure 7, there is shown a third embodiment C of the apparatus 1.

The components of the apparatus 1 in the third embodiment C that are common to the apparatus 1 in the first embodiment A, will not be disclosed again in detail and will be indicated by the same reference numbers that have already been used for the first embodiment A.

In the third embodiment C, the apparatus 1 comprises three milling units 4 slidably supported substantially parallelly to the third axis Y by the first linear guide 120 of the crosspiece element 10.

In use, it is possible to drive selectively the cutting tools 7 of the milling units 4 so as to make on the panel 2, for example substantially simultaneously, three cuts substantially parallel to the first axis X and/or transverse to the third axis Y, or three cuts made along respective closed lines, or, by driving only one of the milling units 4, a cut that is substantially parallel to the third axis Y. In a version of the third embodiment C, not shown, one of the milling units 4 is slidably supported by the first linear guide 120, whilst the other two are slidably supported by the second linear guide 121, or vice versa.

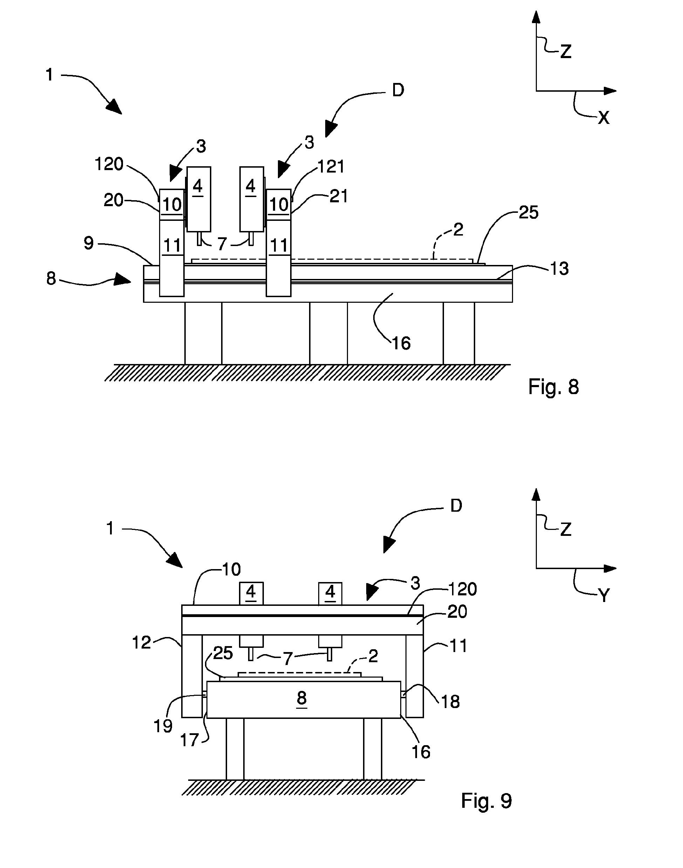

With reference to Figures 8 to 10, there is shown a fourth embodiment D of the apparatus 1.

The components of the apparatus 1 in the fourth embodiment D that are common to the apparatus 1 in the first embodiment A, will not be disclosed again in detail and will be indicated by the same reference numbers that have already been used for the first embodiment A.

In the fourth embodiment D, the apparatus 1 comprises two portal structures 3 slidably supported by the base 8 substantially parallelly to the first axis X.

Further, in this embodiment two milling units 4 are provided, one of which is slidably supported by the second linear guide 121 of one of the two portal structures 3, whilst the other is slidably supported by the first linear guide 120 of the other portal structure 3.

In use, it is possible to drive selectively the cutting tools 7 of the milling units 4 so as to make on the panel 2, for example substantially simultaneously, a pair of cuts substantially parallel to the first axis X and/or transverse or parallel to the third axis Y, or a pair of cuts made along respective closed lines.

In a version of the fourth embodiment D, not shown, both the milling units 4 are slidably supported by the respective first linear guides 120 of the two portal structures 3, or by the second linear guides 121 of the two portal structures 3.

In a further version of the fourth embodiment D, not shown, the milling units 4 are positioned in opposite sides, i.e. on the external sides, of the respective portal structures 3.

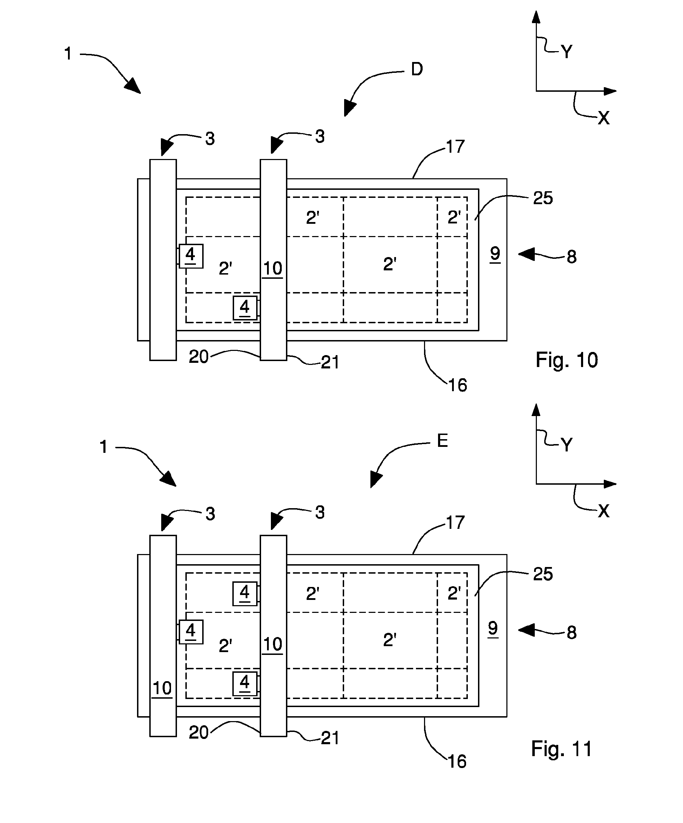

With reference to Figure 11, there is shown a fifth embodiment E of the apparatus 1.

The components of the apparatus 1 in the fifth embodiment E that are common to the apparatus 1 in the first embodiment A will not be disclosed again in detail and will be indicated by the same reference numbers that have already been used for the first embodiment A.

In the fifth embodiment E, the apparatus 1 comprises two portal structures 3 slidably supported by the base 8 substantially parallelly to the first axis X.

In particular, a portal structure 3 slidably supports, by the second linear guide 121, a milling unit 4, whilst the other portal structure 3 slidably supports, by the first linear guide 120, a pair of milling units 4.

In use, it is possible to drive selectively the cutting tools 7 of the milling units 4 so as to make on the panel 2, for example substantially simultaneously, three cuts substantially parallel to the first axis X and/or transverse to the third axis Y, or three cuts made along respective closed lines, or, by driving a milling unit 4 of each portal structure 3, a pair of cuts substantially parallel to the third axis Y.

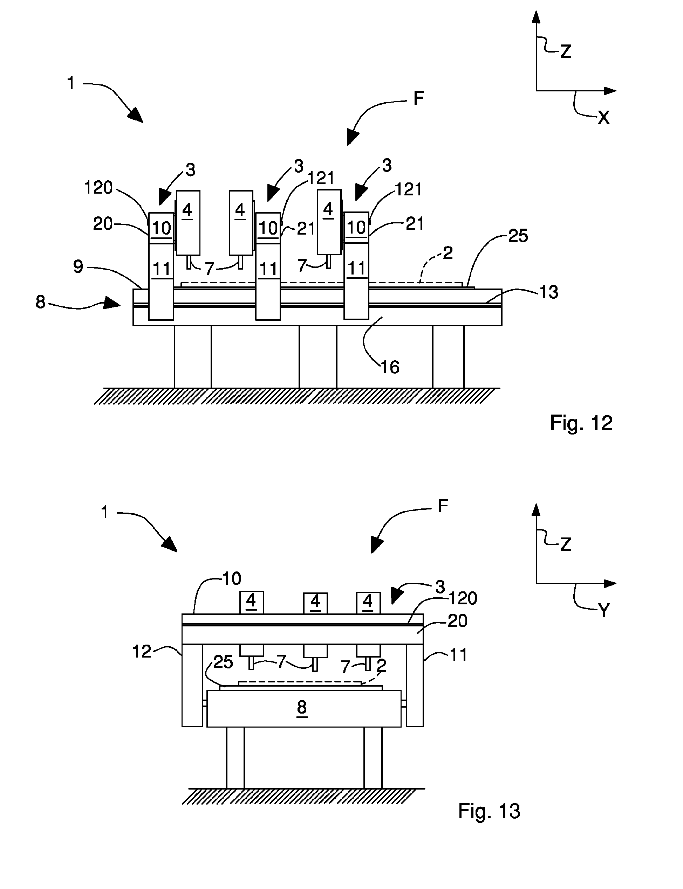

With reference to Figures 12 to 14, there is shown a sixth embodiment F of the apparatus 1.

The components of the apparatus 1 in the sixth embodiment F that are common to the apparatus 1 in the first embodiment A will not be disclosed again in detail and will be indicated by the same reference numbers that have already been used for the first embodiment A.

In the sixth embodiment F, the apparatus 1 comprises three portal structures 3 that are slidably supported by the base 8 substantially parallelly to the first axis X.

In particular, a portal structure 3 slidably supports, by the second linear guide 121, a milling unit 4, a further portal structure 3 slidably supports, by the first linear guide 120, a further milling unit 4, and another portal structure 3 slidably supports, by the first linear guide 120, another milling unit 4.

In use, it is possible to drive selectively the cutting tools 7 of the milling units 4 so as to make on the panel 2, for example substantially simultaneously, three cuts substantially parallel to the first axis X and/or transverse or parallel to the third axis Y, or three cuts made along respective closed lines.

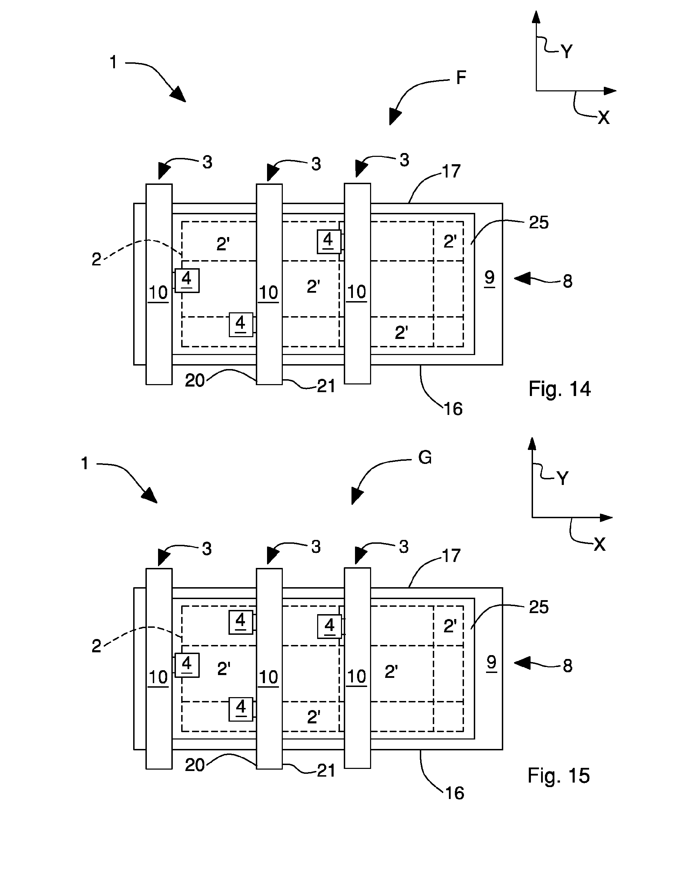

With reference to Figure 15, there is shown a seventh embodiment G of the apparatus 1.

The components of the apparatus 1 in the seventh embodiment G that are common to the apparatus 1 in the first embodiment A, will not be disclosed again in detail and will be indicated by the same reference numbers that have already been used for the first embodiment A.

In the seventh embodiment G, the apparatus 1 comprises three portal structures 3 slidably supported by the base 8 substantially parallelly to the first axis X.

In particular, a portal structure 3 slidably supports, by the second linear guide 121, an operating unit 4, a further portal structure 3 slidably supports, by the first linear guide 120, a pair of further milling units 4, and another portal structure 3 slidably supports, by the first linear guide 120, another milling unit 4.

In use, it is possible to drive selectively the cutting tools 7 of the milling units 4 so as to make on the panel 2, for example substantially simultaneously, four cuts that are substantially parallel to the first axis X and/or transverse to the third axis Y, or four cuts that are made along respective closed lines, or, by driving a milling unit 4 for each portal structure 3, three cuts substantially parallel to the third axis Y.

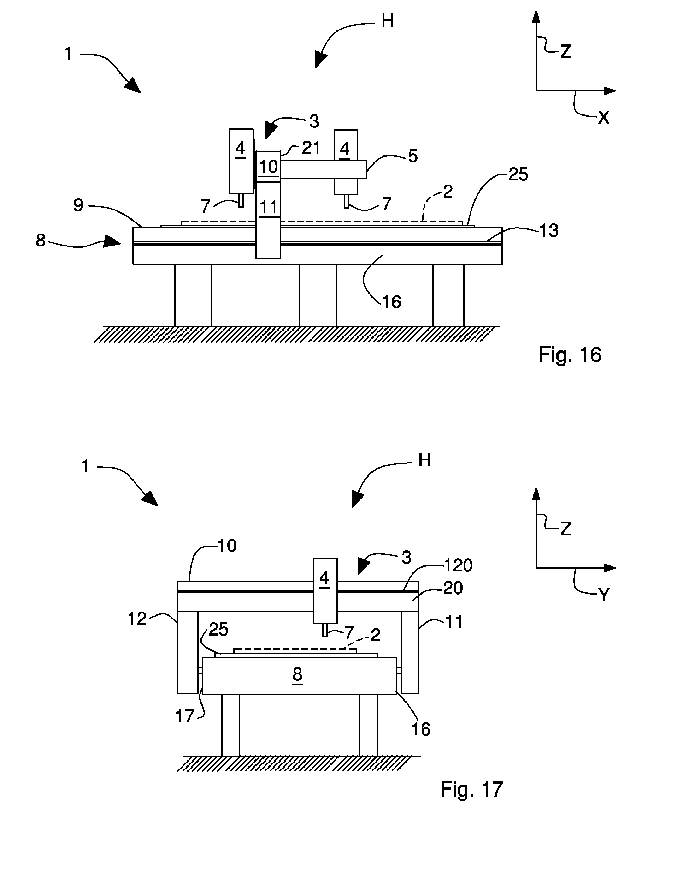

With reference to Figures 16 to 18, there is shown an eighth embodiment H of the apparatus 1.

The components of the apparatus 1 in the eighth embodiment H that are common to the apparatus 1 in the first embodiment A, will not be disclosed again in detail and will be indicated by the same reference numbers that have already been used for the first embodiment A.

In the eighth embodiment H, the apparatus 1 comprises a portal structure 3 slidably supported by the base 8 substantially parallelly to the first axis X.

In the eighth embodiment H, the apparatus 1 comprises a carriage element 5 slidably supported by the second guide 121 of the crosspiece element 10 substantially parallelly to the third axis Y.

The carriage element 5 projecting from the crosspiece element 10 substantially parallelly to the first axis X comprises a side surface 24 on which are mounted or obtained third guides, not shown.

Such third guides extend substantially parallelly to the first axis X and are arranged for slidably supporting at least a milling unit 4 moving towards and away from the crosspiece element 10, the milling unit 4 being, as disclosed before, movable towards and away from the supporting plane 9.

In the eighth embodiment H, the apparatus 1 further comprises a further milling unit 4 that is slidably supported by the first linear guide 120 of the crosspiece element 10.

In use, it is possible to drive selectively the cutting tools 7 of the milling units 4 so as to make on the panel 2, for example substantially simultaneously, a pair of cuts substantially parallel to the first axis X and/or transverse or parallel to the third axis Y, or a pair of cuts made along respective closed lines.

In particular, in order to make such transverse cuts, it is sufficient to move the carriage element 5 along the crosspiece element 10 and simultaneously move the milling unit 4 along the carriage element 5.

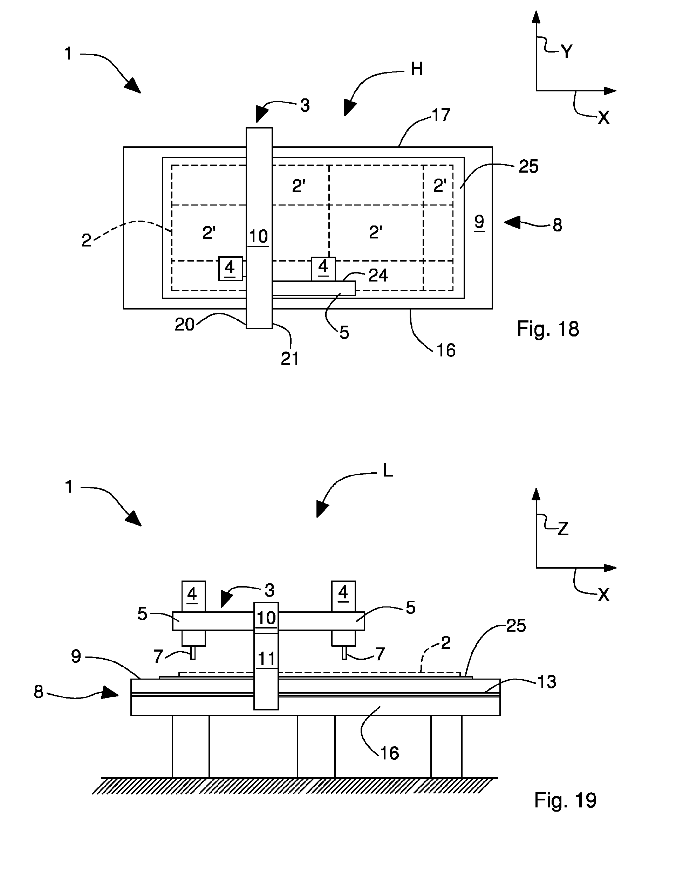

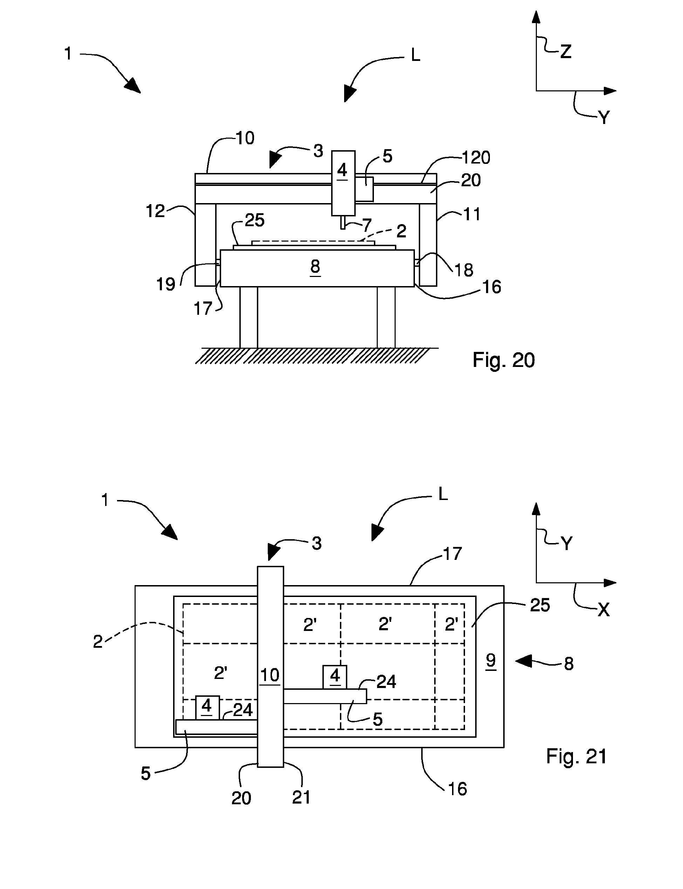

With reference to Figures 19 to 21, there is shown a ninth embodiment L of the apparatus 1.

The components of the apparatus 1 in the ninth embodiment L that are common to the apparatus 1 in the eighth embodiment H, will not be disclosed again in detail and will be indicated by the same reference numbers that have already been used for the eighth embodiment H.

In the ninth embodiment L, the apparatus 1 comprises a portal structure 3 slidably supported by the base 8 substantially parallelly to the first axis X.

In the ninth embodiment L, the apparatus 1 comprises two carriage elements 5 slidably supported respectively by the first guide 120 and by the second guide 121 of the crosspiece element 10 substantially parallelly to the third axis Y.

Such carriage elements 5 slidably support respectively a milling unit 4 and a further milling unit 4 moving towards and away from the crosspiece element 10, the milling units 4 being movable towards and away from the supporting plane 9.

In use, it is possible to drive selectively the cutting tools 7 of the milling units 4 so as to make on the panel 2, for example substantially simultaneously, a pair of cuts substantially parallel to the first axis X and/or transverse or parallel to the third axis Y, or a pair of cuts made along respective closed lines.

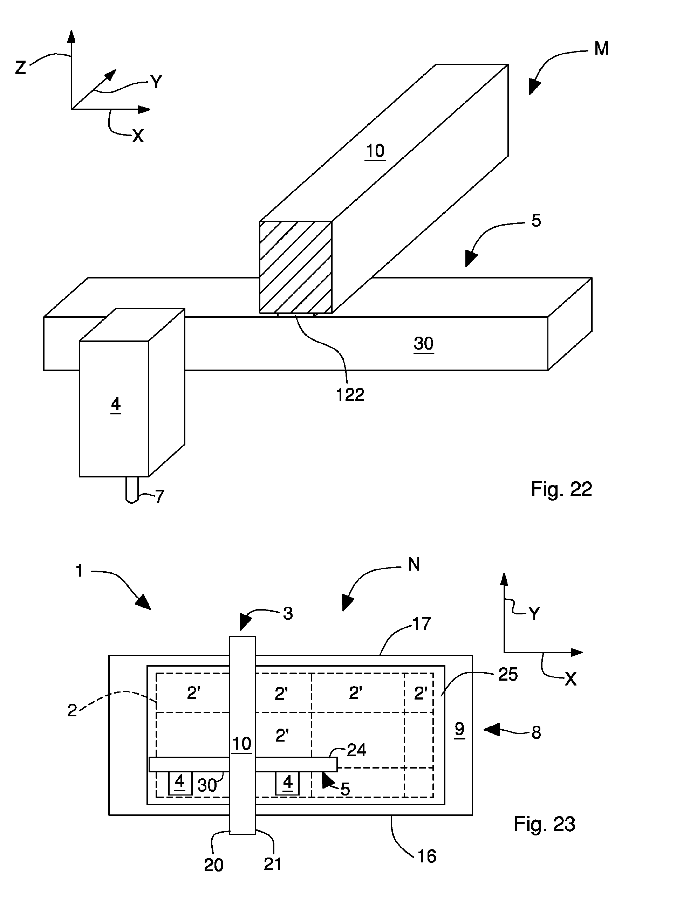

With reference to Figure 22, there is shown a tenth embodiment M of the apparatus 1.

The components of the apparatus 1 in the tenth embodiment M that are common to the apparatus 1 in the eighth embodiment H, will not be disclosed again in detail and will be indicated by the same reference numbers that have already been used for the eighth embodiment H.

In the tenth embodiment M the crosspiece element 10 comprises a third linear guide 122, interposed between the first linear guide 120 and the second linear guide 121 and facing, in use, the panel 2.

The third linear guide 122, extending substantially parallelly to the third axis Y, is arranged for slidably supporting one or more carriage elements 5.

In the tenth embodiment M the carriage element 5 protrudes from opposite parts of the crosspiece element 10 and comprises fourth guides, not shown, which are mounted, or obtained, on a further side surface 30, opposite the side surface 24, of the carriage element 5, such fourth guides being arranged, in use, for supporting one or more milling units 4.

With reference to Figure 23, there is shown an eleventh embodiment N of the apparatus 1.

The components of the apparatus 1 in the eleventh embodiment N that are common to the apparatus 1 in the tenth embodiment M, will not be disclosed again in detail and will be indicated by the same reference numbers that have already been used for the tenth embodiment M.

In the eleventh embodiment N, the aforesaid fourth guides support at least a pair of milling units 4.

In use, it is possible to drive selectively the cutting tools 7 of the milling units 4 so as to make on the panel 2, for example substantially simultaneously, a pair of cuts that are substantially parallel to the first axis X and/or transverse or parallel to the third axis Y, or a pair of cuts made along respective closed lines.

With reference to Figure 24, there is shown a twelfth embodiment P of the apparatus 1.

The components of the apparatus 1 in the twelfth embodiment P that are common to the apparatus 1 in the tenth embodiment M, will not be disclosed again in detail and will be indicated by the same reference numbers that have already been used for the tenth embodiment M.

In the twelfth embodiment P, the apparatus 1 comprises two portal structures 3 slidably supported by the base 8 substantially parallelly to the first axis X.

Each of the two portal structures 3 slidably supports, by the respective third linear guides 122, a pair of carriage elements 5 of the type disclosed in the tenth embodiment M.

In particular, one of the portal structures 3 supports a first pair of milling units 4 by their own fourth guides, whilst the other portal structure 3 supports a second pair of milling units 4 by their own third guides.

In use, it is possible to drive selectively the cutting tools 7 of the milling units 4 so as to make on the panel 2, for example substantially simultaneously, four cuts that are substantially parallel to the first axis X and/or transverse or parallel to the third axis Y, or four cuts made along respective closed lines.

The apparatus 1 further comprises a control and management unit, not shown, to command selectively the milling unit/s 4, the carriage element/s 5 and the portal structure/s 3, so as to move the cutting tool/s to make the required cutting pattern on the panel 2.

It should be noted that the configuration disclosed above, named "closed portal" configuration, of the portal structure 3 can be replaced by a further configuration comprising a crosspiece element supported by a single upright element, this further configuration being named "open portal" configuration.

It should further be noted that in addition to the aforesaid types of cut, further types and combinations of cut are possible by appropriately driving the milling unit/s 4, the carriage element/s 5 and the portal structure/s 3.

Also, it should be noted how, in addition to the embodiments disclosed above, further embodiments can be easily provided by varying the quantity and/or the position of the elements constituting the apparatus 1, i.e. of the portal structure/s 3, of the milling unit/s 4 and of the carriage element/s 5.

Further, it should be noted how, where they are not necessary, it is possible to provide portal structures 3 that are devoid of the first linear guide 120 or of the second linear guide 121.

Also, it should be noted how the apparatus 1 is more flexible than known cutting machines.

In fact, the cutting tools 7 can be moved in space along any work trajectory that enables parts, or portions, of the panel 2 having any shape and size to be obtained.

Further, owing to the limited base dimensions 8, it is possible to make an apparatus 1 that is more compact than known cutting machines.

It should also be noted how the embodiments of the invention with at least two milling units 4 enable high productivity to be obtained.

In fact, such at least two milling units 4 enable different cutting lines to be made independently and at least partially, in the same interval of time, that are, for example, perpendicular to one another, which enables machining time to be reduced and consequently productivity of the apparatus 1 to be increased.

## Claims

1. Apparatus (1) for cutting a panel (2), in particular made of wood or similar materials, comprising a base (8), a portal structure (3) slidably supported by said base (8) along a first axis (X), and operating unit means (4) for machining said panel (2), said operating unit means (4) being movable towards and away from said base (8) along a second axis (Z) and being slidably supported by said portal structure (3) along a third axis (Y), **characterised in that** said operating unit means comprises at least a milling unit (4).

2. Apparatus (1) according to claim 1, wherein said portal structure (3) comprises linear guide means (120, 121, 122) for slidably supporting said operating unit means (4) along said third axis (Y).

3. Apparatus (1) according to claim 2, wherein said linear guide means (120, 121, 122) comprises a first linear guide (120) and a second linear guide (121).

4. Apparatus (1) according to any preceding claim, wherein said operating unit means comprises at least two milling units (4).

5. Apparatus (1) according to any preceding claim, and comprising two portal structures (3).

6. Apparatus (1) according to claim 5, as claim 5 is appended to claim 2, wherein at least a first milling unit of said at least two milling units (4) is supported by said linear guide means (120, 121, 122) of a first portal structure of said two portal structures (3) and at least a second milling unit of said at least two milling units (4) is supported by said linear guide means (120, 121, 122) of a second portal structure of said two portal structures (3), said at least a first milling unit and said at least a second milling unit being positioned by the same side respectively of said first portal structure and of said second portal structure.

7. Apparatus (1) according to claim 5, as claim 5 is appended to claim 2, wherein at least a first milling unit of said at least two milling units (4) is supported by said linear guide means (120, 121, 122) of a first portal structure of said two portal structures (3) and at least a second milling unit of said at least two milling units (4) is supported by said linear guide means (120, 121, 122) of a second portal structure of said two portal structures (3), said at least a first milling unit and said at least a second milling unit being positioned by opposite sides respectively of said first portal structure and of said second portal structure.

8. Apparatus (1) according to any preceding claim, wherein said operating unit means comprises at least three milling units (4).

9. Apparatus (1) according to any preceding claim, and comprising at least three portal structures (3).

10. Apparatus (1) according to claim 9, as claim 9 is appended to claim 8 as appended to claim 2, wherein at least a first milling unit of said at least three milling units (4) is supported by said linear guide means (120, 121, 122) of a first portal structure of said at least three portal structures (3), at least a second milling unit of said at least three milling units (4) is supported by said linear guide means (120, 121, 122) of a second portal structure of said at least three portal structures (3) and at least a third milling unit of said at least three milling units (4) is supported by said linear guide means (120, 121, 122) of a third portal structure of said at least three portal structures (3), said at least a first milling unit, said at least a second milling unit and said at least a third milling unit being positioned by the same side respectively of said first portal structure, of said second portal structure and of said third portal structure.

11. Apparatus (1) according to claim 9, as claim 9 is appended to claim 8 as appended to claim 2, wherein at least a first milling unit of said at least three milling units (4) is supported by said linear guide means (120, 121, 122) of a first portal structure of said at least three portal structures (3), at least a second milling unit of said at least three milling units (4) is supported by said linear guide means (120, 121, 122) of a second portal structure of said at least three portal structures (3) and at least a third milling unit of said at least three milling units (4) is supported by said linear guide means (120, 121, 122) of a third portal structure of said at least three portal structures (3), said at least a first milling unit and said at least a second milling unit being positioned by opposite sides respectively of said first portal structure and of said second portal structure.

12. Apparatus (1) according to any preceding claim, and comprising carriage means (5) slidably supported by said linear guide means (120, 121, 122) along said third axis (Y) and arranged for slidably supporting said at least a milling unit (4) along said first axis (X).

13. Apparatus (1) according to claim 12, wherein said carriage means (5) protrudes from said portal structure (3) substantially parallelly to said first axis (X).

14. Apparatus (1) according to claim 9, wherein said linear guide means (120, 121, 122) comprises a third linear guide (122) associated with said portal structure (3) and interposed between said first linear guide (120) and said second linear guide (121) for supporting said carriage means (5).

15. Apparatus (1) according to any preceding claim, and comprising a control and management unit for controlling and moving at least said portal structure (3), said operating unit means (4) and said carriage means (5) for cutting said panel (2) according to a preset cutting pattern.

16. Method for cutting a panel (2), in particular made of wood or similar materials, comprising cutting said panel (2) along at least a cutting line and still cutting said panel (2) along at least a further cutting line, **characterised in that** said cutting and said still cutting are performed respectively by at least a milling unit (4) and by at least a further milling unit (4) of an apparatus as claimed in any one of claims 1 to 15, said at least a milling unit (4) and said at least a further milling unit (4) being movable independently of one another at least along an operating direction (X; Y; Z).

17. Method according to claim 16, wherein said cutting and said still cutting are performed, at least partially, in the same interval of time.

18. Method according to claim 16, or 17, wherein said at least a cutting line and said at least a further cutting line are substantially parallel, or wherein said at least a cutting line and said at least a further cutting line are substantially transverse, or wherein said at least a cutting line and/or said at least a further cutting line define a closed line.
